# EUROPÄISCHE PATENTSCHRIFT

(11) **EP 0 779 170 B1**
(45) Veröffentlichungstag und Bekanntmachung des Hinweises auf die Patenterteilung: **25.06.2003**
(21) Anmeldenummer: 96120093.8
(22) Anmeldetag: 13.12.1996
(51) Int. Cl.: B60H 3/00

(54) **Schadstoffsonde**
Pollutant detector
Détecteur d'agents polluants

(30) Priorität: 15.12.1995 DE 29519940 U
(43) Veröffentlichungstag der Anmeldung: 18.06.1997
(73) Patentinhaber: paragon AG, 33129 Delbrück (DE)
(72) Erfinder: Frers, Klaus D., D-33129 Delbrück/Paderborn (DE)
(74) Vertreter: Schütz, Peter, Dipl.-Ing.

(56) Entgegenhaltungen:
- EP-A- 0 712 745
- DE-A- 4 300 780
- DE-A- 4 321 371
- US-A- 4 606 219
- US-A- 5 259 813

## Beschreibung

Aus der DE 44 14 594 ist ein Sensor zum Zwecke der schadstoffabhängigen Lüftungssteuerung, insbesondere zur Kraftfahrzeugbelüftung, bekannt, bei dem ein Zinndioxid-Gassensor zur Detektion von in der Luft enthaltenen Schadstoffen eingesetzt wird. Mit Hilfe einer speziellen Auswertmethode lassen sich in der Umgebungsluft Abgase von Benzinfahrzeugen wie auch von Dieselfahrzeugen feststellen und bei Überschreiten einer bestimmten Konzentration kann die Lüftung eines mit einem solchen Sensor ausgestatteten Autos automatisch von Außenluft auf Umluft umgeschaltet werden. Eine solche automatische Lüftungsumschaltung wird in der automobilen Oberklasse bereits angeboten. Die Firma BMW benutzt hierbei eine Sonde, deren Sensor in einer mit einem Metallgitter abgedeckten Kapsel sitzt, die ihrerseits innerhalb eines Gehäuses hinter einem Vliesfilter angeordnet ist, durch welches Umgebungsluft zum Sensor gelangt, wobei jedoch feste Partikel zurückgehalten werden. Eine Sonde der Firma Bosch arbeitet mit zwei separaten Sensoren für Benzin- und Dieselabgase, die jeweils von einer gasdurchlässigen Teflon-hülse umgeben sind, die ihrerseits in einer mit einer Luftöffnung versehenen Metallhülse steckt. Diese Hülsen wiederum sind an einem Gehäuse befestigt, welches eine elektronische Auswertschaltung beherbergt, die Signale zur Steuerung der Umluftklappe liefert:

In der nicht vorveröffentlichten EP-A-0712745 A1 ist eine Schadstoffsonde für Kraftfahrzeuge beschrieben, deren Gehäuse mittels Montagehaken an der Rückseite des Kühlergrills befestigt wird. Am Rand dieser Gehäuseseite befindet sich eine Lufteintrittsöffnung, an die sich ein sich trichterförmig nach innen verjüngender Luftkanal anschließt, der als Wandler für die Geschwindigkeit der eintretenden Luft in einen Druck ausgelegt ist. Nach einer 90°-Umlenkung verläuft der Luftkanal mäanderförmig zwischen wechselseitig angeordneten Tropfwänden und wird danach durch ein Filter zur Oberfläche eines Sensors geführt, der auf einer die elektronische Auswertschaltung enthaltenden Platine montiert ist. Im Bereich des Sensors bildet der Gehäusedeckel eine Erweiterung des Kanals als Luftverweilraum für die Reaktion des Sensors auf Schadstoffe in der dort befindlichen Luft. Nach einer weiteren Umlenkung öffnet sich der Luftkanal auf der nach rückwärts weisenden Seite des auf das Gehäuse aufgesetzten Gehäusedeckels.

Der Erfindung liegt die Aufgabe zugrunde, eine Schadstoffsonde mit einem Gehäuse zu schaffen, welches nicht nur montagetechnische Vorteile bietet, sondern sich auch durch optimales Betriebsverhalten mit schneller Ansprache auf einen Schadstoffgehalt der Luft auszeichnet und so ausgebildet ist, dass das die Sonde schützende Filter nicht unmittelbar von Spritzwasser getroffen wird.

Diese Aufgabe wird durch die in den unabhängigen Ansprüchen angegebenen Merkmale gelöst. Weiterbildungen der Erfindung sind in den Unteransprüchen gekennzeichnet.

Die Anordnung einer den Sensor aufnehmenden Kammer am Gehäusedeckel ergibt eine kompakte und robuste Konstruktion, bei welcher der Sensor mechanisch optimal geschützt ist und dennoch von der Umgebungsluft gut erreicht wird. Die Anordnung des Sensors in einem Ansatz der die Auswertschaltung enthaltenden Platine bietet den Vorteil einer sicheren und unempfindlichen elektrischen Verbindung des Sensors mit der Auswertschaltung, insbesondere wenn der Ansatz ein Teil der Platine selbst ist, obwohl es auch möglich ist, den Sensor auf einer eigenen kleinen Platine anzuordnen und diese über Lötkontakte mit der Hauptplatine parallel oder quer zu dieser zu verbinden. Diese wird in das Gehäuse eingesetzt, wobei der Sensor über das Gehäuse hinaussteht und beim Aufsetzen des Gehäusedeckels in dessen Kammer gelangt. Durch eine Öffnung im Deckel läßt sich gewünschtenfalls dann das Gehäuse mit Gießharz ausfüllen, und nach dessen Aushärten sitzt der Deckel fest, so daß das Gehäuseinnere mit der elektronischen Schaltung hermetisch versiegelt ist, der Sensor in der Kammer sich jedoch außerhalb dieser Versiegelung befindet. Man kann jedoch gegebenenfalls auch nur die Platine mit der Auswertschaltung versiegeln, ohne das ganze Gehäuse mit Gießharz auszufüllen.

Zum Schutz des Sensors gegen in der Luft enthaltene Partikel, wie sie beispielsweise in den Motorraum eines Kraftfahrzeugs gelangen können, ist der Sensor durch Filter geschützt, die mit laminatartigem Aufbau als sogenannte Pads handelsüblich sind. Es handelt sich hierbei um Plättchen aus einem Verbundmaterial aus einem Goretexstützgewebe, welches eine Teflonmembran trägt und gasdurchlässig ist, aber keine Feuchtigkeit durchläßt.

Gemäß einer vorteilhaften Ausbildung der Erfindung werden diese Filterplättchen nach außen noch durch ein Metallgeflecht oder Metallgewebe als dritte Schicht abgedeckt, die nicht nur als mechanischer Schutz für das empfindliche Plättchen und Grobfilter dient, sondern dieses Metallgeflecht isoliert auch durch seine Wärmeträgheit den auf Betriebstemperatur geheizten Sensor gegen die Außentemperatur, um zu verhindern, daß Temperaturschwankungen des Sensors zu Fehlsignalen führen, die nicht durch Luftschadstoffe bedingt sind. Es hat sich gezeigt, daß diese Temperaturabschirmung um so besser wird, je inniger der Kontakt des Metallgeflechts mit den beiden anderen Laminatschichten ist. Die aus dem erwähnten Verbundmaterial Teflon/Goretexgewebe gestanzten Plättchen, also die oben genannten Pads, lassen sich relativ problemlos, etwa durch Randverklebung, über den seitlichen Öffnungen der Kammer anbringen, zwischen denen sich der Sensor befindet. Fertigungstechnisch günstig ist es, einen Streifen Metallgeflecht U-förmig zu biegen und um die Kammer herumzulegen, so daß die beiden U-Schenkel auf den Verbundmaterialplättchen aufliegen und beim Aufschieben der Gehäusekappe fest angedrückt werden.

Um einen sicheren Gehäuseabschluß gegen die den Sensor aufnehmende Kammer zu erreichen, wird in zweckmäßiger Ausgestaltung der Erfindung am Gehäusedeckel innen ein die Öffnung zur Kammer umgebender Bund vorgesehen, der vom Deckel in die Gießharzoberfläche eintaucht, aus welcher der Platinenansatz mit dem Sensor herausragt. Auf diese Weise wird der Kammerquerschnitt gehäuseseitig von der Vergußmasse abgeschlossen, wobei die Höhe des Bundes eventuelle Fülltoleranzen, also Höhenunterschiede des Gießharzspiegels ausgleicht. Ein etwa oben im Gehäuse verbleibender Luftraum ist dann durch den Bund von der Kammer getrennt und erhält auf diese Weise stets ein definiertes Volumen. Zur sicheren Befestigung des Deckels auf dem Gehäuse und dem hermetischen Abschluß des Gehäuseinneren dient ferner ein am Deckel vorgesehener Randflansch, der die Wände des Gehäuses berührend in dieses hineinragt und von der Vergußmasse umgeben ist, von welcher er nach dem Aushärten samt dem Deckel festgehalten wird. Zwei beiderseits der Kammer im Gehäusedeckel zweckmäßigerweise vorgesehene Öffnungen erlauben ein Einfüllen des Gießharzes und ein Entweichen der Luft aus dem Gehäuse.

Um sicherzustellen, daß der in der Kammer befindliche Sensor einerseits von der Umgebungsluft erreicht wird, andererseits aber noch besser gegen die rauhen Umweltbedingungen im Motorraum eines Kraftfahrzeugs geschützt ist, beispielsweise gegen Spritzwasser, wird die Kammer günstigerweise durch eine Gehäusekappe abgedeckt, deren Inneres über ein labyrinthartiges Kanalsystem mit ihrer Außenseite in Verbindung steht, so daß die Umgebungsluft zwar durch dieses Labyrinth möglichst ungehindert zum Sensor gelangen kann, Spritzwasser etc. jedoch von ihm ferngehalten wird. Außerdem sorgt diese Labyrinthanordnung für eine Temperaturisolation zwischen dem Innenraum der Kammer mit dem Sensor und der Umgebung. Ein solches Labyrinthsystem läßt sich zweckmäßigerweise durch eine doppelwandige Ausführung der Gehäusekappe realisieren, wobei der Zwischenraum zwischen Innenwandung und Außenwandung Kanäle bildet, die zwischen gegeneinander versetzten Öffnungen in Innen- und Außenwandung verlaufen. Die Innenseite der Innenwandung ist so gestaltet, daß die Kappe sich auf die Kammer aufschieben läßt und an deren Außenseite geführt und sicher gehalten wird. Zur gegenseitigen Fixierung der Innen- und Außenwand können zweckmäßigerweise Verbindungsstege vorgesehen sein. Spritztechnisch günstig ist es, diese Verbindungsstege in Axialrichtung verlaufen zu lassen und die Luftöffnungen in Innen- und Außenwandung als Längsschlitze auszubilden. Das Gehäuse, sein Deckel und die Kappe werden vorzugs-weise aus Kunststoff im Spritzgußverfahren hergestellt.

Für den Sensor eignet sich insbesondere ein Zinndioxidmaterial, welches auf eine geeignete Betriebstemperatur aufgeheizt wird, bei welcher es sowohl reduzierende als auch oxydierende Gase zu detektieren gestattet, wie dies in der eingangs erwähnten Offenlegungsschrift ausgeführt ist.

Eine andere Lösung der oben genannten Aufgabe besteht darin, die Gehäuseöffnung für den Luftzutritt zum Sensor an einen spritzwassergeschützten Bereich zwischen einer Gehäusewand und einer Montagefläche des Kraftfahrzeugs, in welchem die Sonde montiert wird, zu verlegen, wobei das Sondengehäuse mit Hilfe von Distanzhaltern in einem gewissen Abstand von der Montagefläche gehalten wird und dieser Zwischenraum als Verlängerung des Luftkanals zum Sensor wirkt. Die Lufteintrittsöffnung ist innerhalb dieses Abstandsspaltes gut gegen Spritzwasser geschützt, von dem sie dort nicht getroffen werden kann. Zweckmäßigerweise verlegt man auch die elektrischen Anschlüsse für die im Inneren des Gehäuses befindliche elektronische Auswertschaltung an die der Montagefläche zugewandte Gehäuseseite, so daß auch diese kritische Partie gegen Feuchtigkeit geschützt ist.

Eine Variante der Filteranordnung besteht ferner darin, die Kammer des Gehäuses mit einer stirnseitigen Öffnung zu versehen und in der Stirnfläche der auf die Kammer aufschiebbaren Gehäusekappe ebenfalls eine Öffnung vorzusehen und das Filter zwischen der Stirnseite der Kammer und der Kappe anzuordnen, so daß es zwischen diesen beiden Öffnungen sitzt. Das Filter selbst kann bei dieser wie auch bei den anderen Anordnungen mit einem ausreichend stabilen Metallgitter als Tragstruktur ausgebildet werden, auf welcher die gasdurchlässige Kunststoffmembran angebracht ist. Mit Hilfe einer membranseitigen Klebstoffschicht im Bereich des Filterumfangs kann das Filter dann über der Lufteintrittsöffnung mit dem Gehäuse verklebt werden.

Eine Variante der Ausgestaltung der Gehäusekappe besteht darin, diese im Bereich ihres gehäusefernen Endes mit Lufteintrittsöffnungen zu versehen, die vorzugsweise in den Seitenflächen der Kappe angeordnet werden, die dem oder den Filtern nicht unmittelbar gegenüberliegen. Derartige Belüftungsöffnungen können wahlweise auch die am gehäusenahen Ende der Kappe in Form von zurückgezogenen Bereichen des Kappenrandes vorgesehen werden, wo sie bei einer Montage des Sensorgehäuses mit oben befindlicher Kammer gleichzeitig als Ablauf für etwa eingedrungenes oder kondensiertes Wasser dienen können. Bei umgekehrter Montage können die am Gehäuse fernen Kappenende befindlichen Öffnungen diese Funktion haben. Die vorstehend erläuterten Varianten benötigen nicht notwendigerweise eine Gehäusefüllung mit Gießharz, sondern es hat sich als ausreichend erwiesen, die Platine mit den Bauelementen mit Gießharz zu umhüllen.

Die Erfindung sei nun anhand eines in den beiliegenden Zeichnungen dargestellten Ausführungsbeispiels näher erläutert. Es zeigen:
- Fig. 1: eine aufgebrochene Draufsicht auf das Gehäuse des Sensors mit eingeschobener Schaltungsplatine;
- Fig. 2a: eine Seitenansicht des Gehäusedeckels;
- Fig. 2b: eine Innenansicht des Gehäusedeckels;
- Fig. 3a: eine Seitenansicht der Gehäusekappe;
- Fig. 3b: eine Innenansicht der Gehäusekappe;
- Fig. 4: eine alternative Ausführungsform einer Gehäusekappe;
- Fig. 5: eine spezielle Ausgestaltung eines Filters;
- Fig. 6: eine Variante der Filterbefestigung; und
- Fig. 7: eine weitere Ausführungsform des Sondengehäuses.

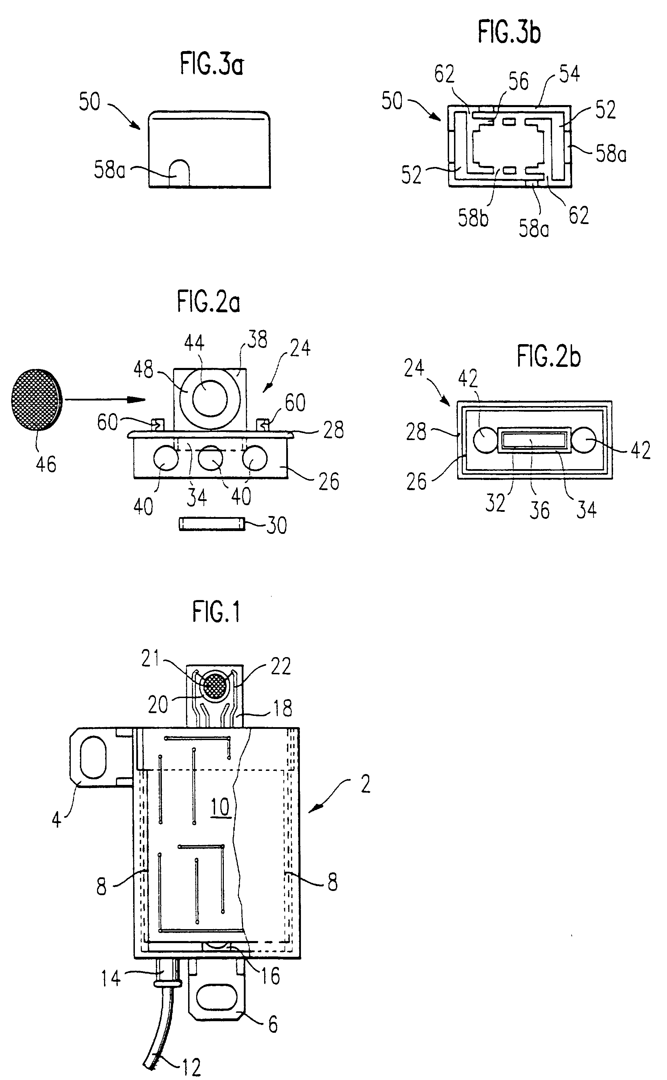

Gemäß Fig. 1 ist das Gehäuse 2 mit zwei Befestigungslaschen 4, 6 versehen, mit denen es an einer geeigneten Stelle in einem Kraftfahrzeug befestigt werden kann. Im Inneren des Gehäuses sitzt in seitlichen Führungsschienen 8 gehalten eine Platine 10 mit hier nicht im einzelnen veranschaulichten Bauelementen der elektronischen Auswertschaltung. Mit der Platine sind elektrische Leitungen in Form eines Kabels 12 verbunden, welches durch einen Kabelstutzen 14 aus dem Gehäuse austritt und zu einer Steuerschaltung für die Belüftung und Klimatisierung des Kraftfahrzeugs führt. Auf der gegenüberliegenden Seite ist das ansonsten allseitig verschlossene Gehäuse offen, so daß die Platine 10 eingeschoben werden kann, wobei sie zwischen den Schienen 8 geführt wird, bis sie innen an einem Anschlag 16 anstößt. Es ragt dann nur noch der Ansatz 18 heraus, der mit einer Aufnahmeöffnung 20 für den Sensor 21 ausgebildet ist. Man erkennt auf dem Ansatz 18 vier Leiterbahnen 22, an welche der Sensor mit einem Heizelement für seine erforderliche Betriebstemperatur und mit den Anschlüssen für sein Ausgangssignal verbunden wird. Dieser Ansatz 18 kann etwa als eigene kleine Sensorplatine ausgebildet sein, die mit der Hauptplatine 10 mechanisch und elektrisch verbunden wird. Der Ansatz 18 kann jedoch auch ein Teil der Platine selbst sein.

Die offene Seite des Gehäuses 2 wird mit Hilfe des in Fig. 2a dargestellten Gehäusedeckels 24 verschlossen, indem dessen umlaufender Flansch 26 in das Gehäuse hineingeschoben wird, bis der Deckelrand 28 an der Gehäusekante anliegt. Man erkennt ferner eine Dichtung 30 in Form eines rechteckigen Rahmens, welche über den Platinenansatz 18 paßt und von einer entsprechenden Ausnehmung 32 aufgenommen wird, die durch einen ins Innere des Gehäusedeckels ragenden umlaufenden Bund 34 gebildet wird. Die Dichtung 30 dient einerseits dem Toleranzausgleich zwischen dem Querschnitt des Platinenansatzes 18 und dem Querschnitt der Öffnung 36 einer Kammer 38, in welche die Platine 18 mit dem Sensor 21 im fertig montierten Zustand hineinragt, und andererseits dem Schutz des Sensors gegen Lötdämpfe beim Verlöten des Ansatzes 18 mit der Platine 10.

Der umlaufende Flansch 26 des Gehäusedeckels 24 ist mit Öffnungen 40 versehen, welche sich mit Gießharz füllen, wenn das Sensorgehäuse abschließend mit Gießharz gefüllt wird, so daß der Deckel sicher mit dem Gehäuse verbunden wird. Zum Einfüllen des Gießharzes bzw. zum Entweichen der Luft beim Füllen dienen zwei weitere Öffnungen 42 in der Deckelfläche. Die bereits erwähnte Kammer 38 ist zur Aufnahme des Ansatzes 18 mit rechteckigem Querschnitt ausgebildet und hat in ihren beiden großen Seitenflächen einander gegenüberliegende Öffnungen 44, welche mit der Aufnahmeöffnung 20 für den Sensor 21 fluchten, so daß die Umgebungsluft zum Sensor gelangen kann. Zum Schutz gegen Verunreinigungen sind die Öffnungen 44 beiderseits mit Filtern 46 abgedeckt, die in die Öffnungen 44 umgebende Vertiefungen 48 eingesetzt und dort befestigt werden, indem sie beispielsweise in die Vertiefung 48 eingeklebt werden.

Die Filter werden aus einem handelsüblichen Verbundmaterial als Plättchen ausgestanzt, welches durch ein Laminat aus einem Goretex-Stützgewebe mit aufgebrachter Teflonmembran besteht, wobei das Teflonmaterial durch Streckung ausreichend porös ist, um Luft zum Sensor gelangen zu lassen. Dieses Verbundmaterial hält Feuchtigkeit vom Sensor fern, läßt aber Gas zu ihm durchdringen. Als äußerste Filterschicht ist ferner noch ein Metallgeflecht oder -gewebe vorgesehen, welches Partikel von den Filterplättchen fernhält, die deren Durchlässigkeit beeinträchtigen könnten. Während die aus Zweischicht-Laminat bestehenden Filterplättchen in den Vertiefungen 48 befestigt werden, wobei die Teflonseite dem Sensor zugewandt ist, kann das Metallgeflecht als Gewebestreifen über eine Kante der Kammer 38 herumgelegt werden, so daß es die beiden Plättchen abdeckt. Wird dann die in Figur 3a veranschaulichte Kappe 50 aufgeschoben, so wird dadurch das Geflecht in seiner Position gehalten. Diese Art der Filterausbildung hat den Vorteil einer Verwendung handelsüblichen Verbundmaterials und handelsüblichen Metallgeflechts, ohne daß ein spezielles Dreischicht-Verbundmaterial angefertigt werden müßte.

Die in den Figuren 3a und 3b veranschaulichte Gehäusekappe 50 hat eine Innenstruktur, wie sie aus Figur 3, welche einen Blick in die Kappe zeigt und labyrinthähnliche Luftkanäle 52 erkennen läßt, ersichtlich ist. Diese Luftkanäle entstehen durch eine doppelwandige Ausbildung der Gehäusekappe mit einer Außenwand 54 und einer Innenwand 56. In der Außenwand sind im dargestellten Ausführungsbeispiel an allen vier Seiten schlitzförmige Öffnungen 58a vorgesehen, durch welche Umgebungsluft in die Kanäle 52 eintreten kann. Die Innenwand ist mit schlitzartigen Öffnungen 58b ausgebildet, welche gegen die Öffnungen 58a versetzt sind, so daß die Luft nicht auf direktem Wege sondern labyrinthartig von den Öffnungen 58a durch die Kanäle 52 zu den Öffnungen 58b gelangt und erst von dort aus die Filter 46 erreichen kann, um schließlich durch die Öffnungen 44 zum Sensor zu gelangen. Durch diese Luftführung wird eine Temperaturisolierung zwischen dem Inneren der Kammer und der Umgebung sichergestellt, so daß auch bei Temperaturänderungen der Außenluft die Betriebstemperatur des Sensors konstantgehalten wird, wie dies zum Vermeiden eines Entstehens von Störsignalen des Sensors erforderlich ist. Zur besseren Fixierung der beiden Wände sind diese über Verbindungsstege 62 miteinander verbunden.

Das durch die beiden gepunkteten Linien in Figur 3b ergänzte Rechteck im Inneren des Gehäusedeckels 24 entspricht dem Außenquerschnitt der Kammer 38, so daß der Deckel beim Aufsetzen geführt wird. Man erkennt in Figur 2a ferner beiderseits der Kammer 38 Rastnasen 60, welche in die an den Schmalseiten des Gehäusedeckels befindlichen Kanäle 52 hineinragen und hinter hier nicht gezeichneten Innenvorsprüngen der Kappe einrasten, wenn diese ihre Endstellung auf dem Gehäusedeckel erreicht hat.

Bei der Montage wird nach dem Einschieben der fertigen Platine 10 zwischen die Führungsschienen 8 in das Gehäuse 2, wobei das Kabel 12 durch den Kabelstutzen herausgeführt wird, der Gehäusedeckel 24 mit seinem Flansch 26 in das Gehäuse eingesetzt und festgedrückt, bis sein Deckelrand 28 an der Gehäusekante anliegt. Dann wird durch eine der Öffnungen 42 Gießharz eingebracht, bis das Gehäuse gefüllt ist, wobei die gesamte Platine mit ihren Bauelementen völlig eingegossen wird. Die zunächst im Gehäuse befindliche Luft entweicht dabei auch durch die andere Öffnung 42. Der umlaufende Bund 34 und die Dichtung 30 tauchen durch die Gießharzoberfläche und stellt einen hermetischen Verschluß sämtlicher eingegossenen Teile bis zum Gehäusedeckel sicher. Nach dem Aushärten des Gießharzes und dem Abdecken der Filterplättchen 46 durch das erwähnte Metallgeflecht wird die Gehäusekappe 50 aufgeschoben und bis zum Verrasten mit den Nasen 60 angedrückt. Damit ist die Montage beendet und der Sensor kann abschließend geprüft werden.

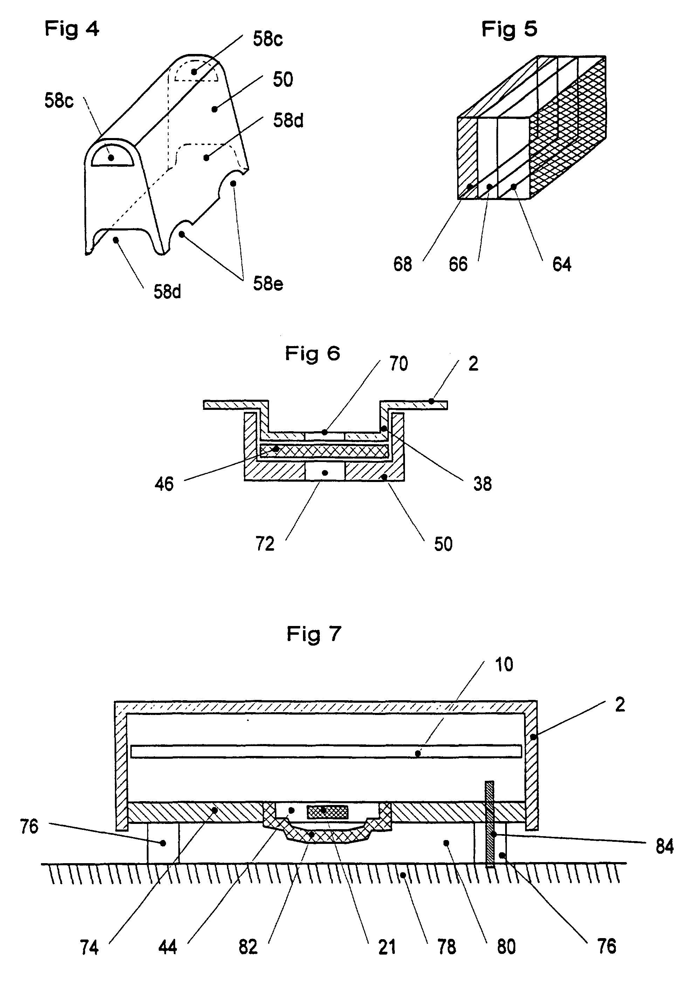

Die in Fig. 4 veranschaulichte Gehäusekappe 50 ist hinsichtlich der Luftöffnungen 58 etwas anders gestaltet. Man erkennt an den oberen Seitenflächen eine vordere und hintere Luftöffnung 58c, deren Gestalt hier halbkreisförmig gewählt ist, jedoch auch jede andere geeignete Form haben kann. Ferner erkennt man untere Luftöffnungen 58d an den unteren Kanten der gleichen Seitenwandungen sowie Öffnungen 58e an den Unterkanten der jeweils anderen Seitenwände. All diese Öffnungen dienen einem guten Luftaustausch der von der Kappe umschlossenen Kammer, durch welche die Luft über die Filter zum Sensor gelangt. Erforderlichenfalls können im Inneren der Kammer noch Wände zur Bildung labyrinthähnlicher Kanäle vorgesehen werden, die hier jedoch der Übersicht halber nicht eingezeichnet sind. Je nach Montage des Sondengehäuses kann durch diese Öffnungen Wasser ablaufen, welches möglicherweise ins Innere der Kappe gelangt ist.

Fig. 5 veranschaulicht eine weitere Ausführungsform eines Filters, welches Verunreinigungen der Luft von der Sonde fernhält. Ein Metallgitter 64 ausreichender Stabilität dient als Tragstruktur für eine Filtermembran 66 aus gasdurchlässigem Kunststoffmaterial, wie dem bereits erwähnten Teflon oder Tetrafluoräthylen. Auf der gegenüberliegenden Seite dieser Filtermembran befindet sich eine Klebstoffschicht 68, in deren mittleren Bereich eine hier nicht eigens veranschaulichte Ausnehmung vorgesehen ist, durch welche die gefilterte Luft zum Sensor gelangt. Zweckmäßigerweise stimmt der klebstofffreie Bereich in seiner Form mit der Lufteintrittsöffnung des Gehäuses überein, welche durch das Filter abgedeckt wird.

Eine Variante für die Filterbefestigung ist in Fig. 6 gezeigt. Die Kammer 38 des Gehäuses 2 hat hier eine stirnseitige Öffnung 70, und in der Stirnseite der Kappe 50 ist eine entsprechende Öffnung 72 vorgesehen. Das Filter 46 ist in der veranschaulichten Weise zwischen der Kammer und der Kappe festgeklemmt, so daß es sich zwischen den beiden Öffnungen 70 und 72 befindet. Die Befestigung der Kappe 50 auf der Kammer 38 kann durch Klemmwirkung oder über eine Verklebung in bekannter Weise erfolgen und ist hier nicht näher veranschaulicht.

Eine Variante der Gehäuseform für die Sonde zeigt Fig. 7. Hierbei wird der Gedanke des Spritzwasserschutzes nicht wie bei den bisher beschriebenen Ausführungsformen durch eine speziell gestaltete Gehäusekappe erreicht, die auf einer den Sensor beherbergenden Kammer sitzt, sondern durch die Ausnutzung eines spritzwassergeschützten spaltförmigen Zwischenraums zwischen einer der Wandungen des Sondengehäuses und der Montagefläche, an welcher die Sonde im Kraftfahrzeug befestigt wird. Hierbei ist die Gehäusewand 74 mit Abstandshaltern 76 versehen, die an einer Montagefläche 78 aufsitzen und dafür sorgen, daß zwischen der Gehäusewand 74 und der Montagefläche 78 ein Spalt oder Zwischenraum 80 verbleibt, der eine Verbindung von der zum Sensor 21 führenden Gehäuseöffnung 44 nach außen darstellt. Die Öffnung 44 wird durch ein Filter mit einer domartigen Auswölbung 82 abgedeckt, so daß der Sensor 21 in den Bereich der Gehäusewand 74 verlegt werden kann. Gewünschtenfalls kann die domartige Auswölbung 82 auch Teil eines Schutzgitters sein, hinter dem sich das Filter als separates Teil befindet.

Bei dieser Ausführungsform sind ferner die elektrischen Anschlüsse 84 durch die Gehäusewand 74 geführt, welche der Montagefläche 78 gegenüberliegt, so daß sich diese Anschlüsse ebenfalls im spritzwassergeschützten Zwischenraum 80 befinden.

## Patentansprüche

1. Schadstoffsonde, insbesondere für Kraftfahrzeuge, mit einem Gehäuse (2) für eine elektronische Auswertschaltung und zur Aufnahme eines Sensors (21), der über mindestens einen, einen Filter (46) enthaltenden Luftkanal (52) mit der Umgebungsluft in Verbindung steht,
wobei
der Sensor (21) in einem Ansatz (18) der die Auswertschaltung enthaltenden Platine (10) angeordnet ist und
der Sensor (21) und der Ansatz (18) in eine mit mindestens einer Öffnung (44) versehene Kammer (38) eines Gehäusedeckels (24) ragen, dessen Öffnung mit einem Filter (46) versehen ist,
und wobei auf die Kammer (38) eine mit mindestens einer Luftöffnung (58) ausgebildete Gehäusekappe (50) aufgeschoben ist.

2. Sonde nach Anspruch 1, **dadurch gekennzeichnet, daß** der Ansatz (18) in Form einer an der Platine (10) angebrachten Hilfsplatine (18) ausgebildet ist.

3. Sonde nach Anspruch 1 oder 2, **dadurch gekennzeichnet, daß** die Gehäusekappe (50) im Bereich ihres gehäusefernen Endes und im Bereich ihres - gehäusenahen - Randes mit Ausnehmungen (58c,d,e) ausgebildet ist.

4. Sonde nach Anspruch 3, **dadurch gekennzeichnet, daß** die Luftöffnungen bildenden Ausnehmungen (58c,d) in dem Sensor (21) nicht unmittelbar gegenüberliegenden Wänden der Gehäusekappe (50) vorgesehen sind.

5. Sonde nach Anspruch 1, 2, 3 oder 4, **dadurch gekennzeichnet, daß** die Gehäusekappe (50) mit labyrinthartig zwischen äußeren und inneren Luftöffnungen (58a,b) verlaufenden Kanälen (52) ausgebildet ist.

6. Sonde nach einem der vorstehenden Ansprüche, **dadurch gekennzeichnet, daß** der Gehäusedeckel (24) an eine offene Gehäuseseite ansetzbar und die nach außen von ihm wegragende Kammer (38) zur Aufnahme des Sensors (21) flach ausgebildet ist und die Öffnung (44) an einer größeren Seitenfläche der Kammer (24) neben dem Sensor vorgesehen sind.

7. Sonde nach Anspruch 6, **dadurch gekennzeichnet, daß** die Kammer (38) mit zwei, beiderseits des Sensors (21) vorgesehenen Öffnungen (44) ausgebildet ist, die jeweils mit Filtern (46) versehen sind.

8. Sonde nach Anspruch 6, **dadurch gekennzeichnet, daß** die Kammerwandung sich über die Deckelfläche nach innen fortsetzt und einen den Kammerquerschnitt umgrenzenden Bund (34) bildet, der in eine das Gehäuse (2) mit der Platine (10) ausfüllende Vergußmasse eintaucht.

9. Sonde nach Anspruch 8, **dadurch gekennzeichnet, daß** zwischen dem Bund (34) und dem Platinenansatz (18) eine Dichtung (30) vorgesehen ist.

10. Sonde nach Anspruch 8, **dadurch gekennzeichnet, daß** der Gehäusedeckel (24) am Rand mit einem umlaufenden Flansch (26) versehen ist, der in das Gehäuse (2) hineinragt und an den Gehäusewänden anliegt.

11. Sonde nach einem der vorstehenden Ansprüche, **dadurch gekennzeichnet, daß** der Gehäusedeckel (24) beiderseits der Kammer (38) Öffnungen (42) aufweist.

12. Sonde nach einem der vorstehenden Ansprüche, **dadurch gekennzeichnet, daß** das Filter (46) zwischen die mit der Öffnung (70) versehene Wand der Kammer (38) und die auf die Kammer aufgeschobene, mit einer korrespondierenden Öffnung (72) ausgebildete Gehäusekappe (50) eingesetzt ist.

13. Sonde nach einem der vorstehenden Ansprüche, **dadurch gekennzeichnet, daß** das Filter (46) als Plättchen aus einer Stützgitterschicht (z.B. Goretexgewebe, Metallgitter) mit einer aufgebrachten Membran aus gasdurchlässigem Kunststoffmaterial (z.B. Tetrafluoräthylen) ausgebildet ist.

14. Sonde nach einem der vorstehenden Ansprüche, **dadurch gekennzeichnet daß** das Filter (46) durch ein Plättchen aus gasdurchlässigem Kunststoffmaterial (z.B. Tetrafluoräthylen) gebildet wird.

15. Sonde nach Anspruch 13 oder 14, **dadurch gekennzeichnet, daß** das Filterplättchen auf einer Seite mit einer eine Öffnung freilassenden Klebstoffschicht (68) versehen ist.

16. Sonde nach Anspruch 12, 13 und 14, **dadurch gekennzeichnet, daß** das Filterplättchen nach außen durch ein Metallgeflecht abgedeckt ist.

17. Sonde nach einem der Ansprüche 1 bis 7, **dadurch gekennzeichnet, daß** die Gehäusekappe (50) doppelwandig ausgebildet ist und die Luftöffnungen (58a) in der Außenwand (54) gegenüber den Luftöffnungen (58b) in der Innenwand (56) versetzt sind.

18. Sonde nach Anspruch 17, **dadurch gekennzeichnet, daß** mindestens die Kammer (38) und die Gehäusekappe (50) einen Rechteckquerschnitt haben und in jeder der vier Außenwandseiten je ein Luftschlitz (Luftöffnungen 58a), dagegen nur in den beiden langen Innenwandseiten je zwei Luftschlitze (Luftöffnungen 58b) vorgesehen sind.

19. Sonde nach Anspruch 17 oder 18, **dadurch gekennzeichnet, daß** zwischen Innenwand (56) und Außenwand (54) Verbindungsstege (62) verlaufen.

20. Sonde nach einem der vorstehenden Ansprüche, **dadurch gekennzeichnet, daß** der Sensor ein Metall-Oxid-Sensor, insbesondere ein Zinndioxid-Sensor ist.

21. Schadstoffsonde, insbesondere für Kraftfahrzeuge, mit einem Gehäuse (2) zur Aufnahme einer Platine (10) mit einer elektronischen Auswertschaltung für einen Sensor (21), der mit der Umgebungsluft über einen Luftkanal in Verbindung steht, in welchem ein Filter (82) vorgesehen ist und welcher eine Lufteintritts-Öffnung (44) in einer Gehäusewand (74) aufweist, die mit Montageelementen zur Anbringung an einer Sonden-Montagefläche (78) versehen ist,
**dadurch gekennzeichnet,**
**dass** die Montageelemente als Abstandshalter (76) ausgebildet sind und die Lufteintritts-Öffnung (44) in einem solchen Abstand vom Rand der Gehäusewand (74) angeordnet ist, dass der Zwischenraum (80) zwischen Gehäusewand (74) und Montagefläche (78) eine Fortsetzung des Luftkanals bildet,
und **dass** die Lufteintritts-Öffnung (44) ferner durch den Filter (82) abgedeckt ist und der Sensor (21) im Bereich der Lufteintrittsöffnung (44) angeordnet ist.

22. Schadstoffsonde nach Anspruch 21, **dadurch gekennzeichnet, daß** das Filter eine domartige Auswölbung (82) aufweist, unterhalb deren der Sensor (21) angeordnet ist.

23. Schadstoffsonde nach Anspruch 21, **dadurch gekennzeichnet, daß** an der die Öffnung (44) aufweisenden Gehäusewand (74) elektrische Anschlüsse (84) für die Auswertschaltung angeordnet sind.

## Claims

1. A pollutant probe, especially for motor vehicles, with a housing (2) for an electronic evaluation circuit and for reception of a sensor (21), which is in communication with the ambient air through at least one air channel (52) containing a filter (46), wherein the sensor (21) is arranged in a tongue (18) of the circuit board (10) comprising the evaluation circuit and the sensor (21) and the tongue (18) project into a chamber (38) of a housing cover (24) provided with at least one opening (44), the opening of the cover being provided with a filter (46), and wherein a housing cap (50) formed with at least one air opening (58) is pushed on to the chamber (38).

2. A probe according to claim 1, **characterized in that** the tongue (18) is in the form of an auxiliary circuit board (18) fitted on the circuit board (10).

3. A probe according to claim 1 or 2, **characterized in that** the housing cap (50) is formed with recesses (58c, d, e) in the region of its end remote from the housing and in the region of its edge - near the housing.

4. A probe according to claim 3, **characterized in that** the recesses (58c, d) forming air openings are provided in walls of the housing cap (50) not directly opposite the sensor (21).

5. A probe according to claim 1, 2, 3 or 4, **characterized in that** the housing cap (50) is formed with labyrinthine channels (52) between outer and inner air openings (58a, b).

6. A probe according to any of the preceding claims, **characterized in that** the housing cover (24) can be fitted on an open housing side and the chamber (38) for reception of the sensor (21) projecting away from it to the outside is of flat form and the opening (44) are [sic] provided in a larger side face of the chamber (24) beside the sensor.

7. A probe according to claim 6, **characterized in that** the chamber (38) is formed with two openings (44) on the two sides of the sensor (21), provided with respective filters (46).

8. A probe according to claim 6, **characterized in that** the chamber wall continues beyond the cover surface to the inside and forms a rim (34) which bounds the chamber cross-section and dips into a potting mass filling the housing (2) with the circuit board (10).

9. A probe according to claim 8, **characterized in that** a seal (30) is provided between the rim (34) and the circuit board tongue (18).

10. A probe according to claim 8, **characterized in that** the housing cover (24) is provided at the edge with a surrounding flange (26) which projects into the housing (2) and bears on the housing walls.

11. A probe according to any of the preceding claims, **characterized in that** the housing cover (24) has openings (42) on both sides of the chamber (38).

12. A probe according to any of the preceding claims, **characterized in that** the filter (46) is fitted between the wall of the chamber (38) provided with the opening (70) and the housing cap (50) formed with a corresponding opening (72) and pushed on to the chamber.

13. A probe according to any of the preceding claims, **characterized in that** the filter (46) is in the form of a platelet or a supporting mesh layer (e.g. Goretex fabric, metal grating) with an applied membrane of plastics material permeable to gas (e.g. tetrafluorethylene).

14. A probe according to any of the preceding claims, **characterized in that** the filter (46) is formed by a platelet of plastics material permeable to gas (e.g. tetrafluorethylene).

15. A probe according to claim 13 or 14, **characterized in that** the filter platelet is provided on one side with an adhesive layer (68) leaving an opening free.

16. A probe according to claim 12, 13 and 14, **characterized in that** the filter platelet is covered on the outside by a metal lattice.

17. A probe according to any of claims 1 to 7, **characterized in that** the housing cap (50) is of double walled form and the air openings (58a) in the outer wall (54) are offset relative to the air openings (58b) in the inner wall (56).

18. A probe according to claim 17, **characterized in that** at least the chamber (38) and the housing cap (50) have a rectangular cross-section and an air slot (air opening 58a) is provided in each of the four outer wall sides whereas two air slots (air openings 58b) are provided only in the two long inner wall sides.

19. A probe according to claim 17 or 18, **characterized in that** connecting webs (62) extend between the inner wall (56) and the outer wall (54).

20. A probe according to any of the preceding claims, **characterized in that** the sensor is a metal oxide sensor, especially a tin oxide sensor.

21. A pollutant probe, especially for motor vehicles, with a housing (2) for reception of a circuit board (10) with an electronic evaluation circuit for a sensor (21), which is in communication with the ambient air through an air channel in which a filter (82) is provided and which has an air inlet opening (44) in a housing wall (74) which is provided with mounting elements for fitting on a probe mounting surface (78), **characterized in that** the mounting elements are formed as spacers (76) and the air inlet opening (44) is disposed a such a distance from the edge of the housing wall (74) that the space (80) between the housing wall (74) and the mounting surface (78) forms a continuation of the air channel, and **in that** the air inlet opening (44) is further covered by the filter (82) and the sensor (21) is arranged in the region of the air inlet opening (44).

22. A pollutant probe according to claim 21, **characterized in that** the filter has a dome-like bulge (82), below which the sensor (21) is arranged.

23. A pollutant probe according to claim 21, **characterized in that** electric terminals (84) for the evaluation circuit are provided on the housing will (74) having the opening (44).

## Revendications

1. Détecteur d'agents polluants, en particulier pour véhicules à moteur, avec un boîtier (2) pour un circuit d'exploitation électronique et pour le logement d'un détecteur (21) qui communique avec l'air environnant par au moins une canalisation d'aération (52) comprenant un filtre (46), le détecteur (21) étant monté dans une pièce en saillie (18) de la platine (10) comprenant le circuit d'exploitation, et le détecteur (22) et la pièce en saillie (18) dépassant dans une chambre (38) d'un couvercle de boîtier (24) munie d'au moins une ouverture (44) dont l'ouverture est munie d'un filtre (46), et un capot de boîtier (50), formé avec au moins une ouverture d'aération (58), étant glissé sur la chambre (38).

2. Détecteur selon la revendication 1, **caractérisé en ce que** la pièce en saillie (18) est conçue sous forme d'une platine auxiliaire (18) disposée sur la platine (10).

3. Détecteur selon la revendication 1 ou 2, **caractérisé en ce que** le capot de boîtier (50) est formé avec des creux (58c,d,e) dans la zone de son extrémité éloignée du boîtier et dans la zone de son bord - voisin du boîtier.

4. Détecteur selon la revendication 3, **caractérisé en ce que** les creux (58c,d) formant des ouvertures d'aération sont prévus dans les parois du capot de boîtier (50) qui ne sont pas directement opposées au détecteur (21).

5. Détecteur selon la revendication 1, 2, 3 ou 4, **caractérisé en ce que** le capot de boîtier (50) est formé avec des canalisations (52) s'étendant de manière labyrinthique entre les ouvertures d'aération extérieures et intérieures (58a,b).

6. Détecteur selon l'une quelconque des revendications précédentes, **caractérisé en ce que** le couvercle de boîtier (24) peut être rattaché à un côté ouvert du boîtier et **en ce que** la chambre (38) partant de celui-ci vers l'extérieur a une forme plate pour recevoir le détecteur (21) et **en ce que** les ouvertures (44) sont prévues sur une plus grande face latérale de la chambre (24) à côté du détecteur.

7. Détecteur selon la revendication 6, **caractérisé en ce que** la chambre est formée avec deux ouvertures (44) prévues de chaque côté du détecteur (21) qui sont chacune munies de filtres (46).

8. Détecteur selon la revendication 6, **caractérisé en ce que** les parois de la chambre se prolongent vers l'intérieur sur la surface du couvercle et forment un collet (34) délimitant la section transversale de la chambre qui s'enfonce dans une masse de scellement remplissant le boîtier (2) avec la platine (10).

9. Détecteur selon la revendication 8, **caractérisé en ce qu'**il est prévu une garniture d'étanchéité (30) entre le collet (34) et la pièce en saillie de platine (18).

10. Détecteur selon la revendication 8, **caractérisé en ce que** le couvercle du boîtier (24) est muni, sur le bord, d'une bride tournante (26) qui déborde dans le boîtier (2) et qui s'appuie sur les parois du boîtier.

11. Détecteur selon l'une quelconque des revendications précédentes, **caractérisé en ce que** le couvercle de boîtier (24) comporte des ouvertures (42) de chaque côté de la chambre (38).

12. Détecteur selon l'une quelconque des revendications précédentes, **caractérisé en ce que** le filtre (46) est inséré entre la paroi de la chambre (38) munie de l'ouverture (70) et le capot de boîtier (50) qui coulisse sur la chambre, formé avec une ouverture correspondante (72).

13. Détecteur selon l'une quelconque des revendications précédentes, **caractérisé en ce que** le filtre (46) est formé comme une plaquette constituée d'une couche de grille support (par exemple, un tissu en Gortex, une grille métallique) avec une membrane faite d'une matière plastique perméable aux gaz (par exemple, du tétrafluoréthylène) appliquée dessus.

14. Détecteur selon l'une quelconque des revendications précédentes, **caractérisé en ce que** le filtre (46) est formé par une plaquette faite d'une matière plastique perméable aux gaz (par exemple, du tétrafluoréthylène).

15. Détecteur selon la revendication 13 ou 14, **caractérisé en ce que** la plaquette de filtre est munie sur un côté d'une couche de colle (68) laissant libre une ouverture.

16. Détecteur selon les revendications 12, 13 et 14, **caractérisé en ce que** la plaquette de filtre est recouverte vers l'extérieur d'un treillis métallique.

17. Détecteur selon l'une quelconque des revendications 1 à 7, **caractérisé en ce que** le capot de boîtier (50) est formé avec une double paroi et **en ce que** les ouvertures d'aération (58a) dans la paroi extérieure (54) sont décalées par rapport aux ouvertures d'aération (58b) dans la paroi intérieure (56).

18. Détecteur selon la revendication 17, **caractérisé en ce qu'**au moins la chambre (38) et le capot de boîtier (50) ont une section transversale rectangulaire et **en ce que**, sur chacun des quatre côtés de la paroi extérieure, il est prévu une fente d'aération (ouvertures d'aération 58a), mais par contre, il est prévu deux fentes d'aération (ouvertures d'aération 58b) seulement sur les deux longs côtés de la paroi intérieure.

19. Détecteur selon la revendication 17 ou 18, **caractérisé en ce que** des nervures de raccordement (62) s'étendent entre la paroi intérieure (56) et la paroi extérieure (54).

20. Détecteur selon l'une quelconque des revendications précédentes, **caractérisé en ce que** le détecteur est un détecteur en oxyde métallique, en particulier un détecteur en oxyde stannique.

21. Détecteur d'agents polluants, en particulier pour véhicules à moteur, avec un boîtier (2) pour le logement d'une platine (10) avec un circuit d'exploitation électronique pour un détecteur (21) qui communique avec l'air environnant par une canalisation d'aération dans laquelle est prévu un filtre (82) et qui comporte une ouverture d'entrée d'air (44) dans une paroi de boîtier (74) qui est munie d'éléments de montage pour l'installation sur une surface de montage de détecteur (78), **caractérisé en ce que** les éléments de montage sont formés comme des entretoises (76) et **en ce que** l'ouverture d'entrée d'air (44) est disposée à une distance du bord de la paroi du boîtier (74) telle que l'espacement (80) entre la paroi du boîtier (74) et la surface de montage (78) forme un prolongement de la canalisation d'aération, et **en ce que** l'ouverture d'entrée d'air (44) est, en outre, recouverte par le filtre (82) et **en ce que** le détecteur (21) est disposé dans la zone de l'ouverture d'entrée d'air (44).

22. Détecteur d'agents polluants selon la revendication 21, **caractérisé en ce que** le filtre présente un bombement en forme de dôme (82) sous lequel est disposé le détecteur (21).

23. Détecteur d'agents polluants selon la revendication 21, **caractérisé en ce que** des raccordements électriques (84) sont installés sur la paroi de boîtier (74) comportant l'ouverture (44) pour le circuit d'exploitation.
